# EUROPÄISCHE PATENTSCHRIFT

(11) **EP 1 000 121 B1**
(45) Veröffentlichungstag und Bekanntmachung des Hinweises auf die Patenterteilung: **13.06.2001**
(21) Anmeldenummer: 98938683.4
(22) Anmeldetag: 02.07.1998
(51) Int. Cl.: C08L 83/04, C08K 5/09, C08K 5/521, C08K 5/54

(54) **UNTER ABSPALTUNG VON ALKOHOLEN ZU ELASTOMEREN VERNETZBARE ORGANOPOLYSILOXANMASSEN**
CROSS-LINKABLE ORGANOPOLYSILOXANE MATERIALS FORMED INTO ELASTOMERS BY SEPARATING ALCOHOLS
MATIERES POLYORGANOSILOXANIQUES RETICULABLES AVEC SEPARATION D'ALCOOLS POUR FORMER DES ELASTOMERES

(30) Priorität: 31.07.1997 DE 19733168
(43) Veröffentlichungstag der Anmeldung: 17.05.2000
(73) Patentinhaber: WACKER-CHEMIE GMBH, D-81737 München (DE)
(72) Erfinder: SOMMER, Oswin, D-84489 Burghausen (DE); HECHTL, Wolfgang, D-84489 Burghausen (DE); OBERNEDER, Stefan, D-84489 Burghausen (DE); DORSCH, Norman, D-84489 Burghausen (DE); HEINRICH, Rudolf, D-84547 Emmerting (DE)
(74) Vertreter: Fritz, Helmut, Dr.
(86) Internationale Anmeldenummer: EP9804099
(87) Internationale Veröffentlichungsnummer: WO9906486

(56) Entgegenhaltungen:
- DE-C- 19 507 416
- US-A- 4 536 540

## Beschreibung

Die Erfindung betrifft die Herstellung von Organyloxygruppen aufweisenden Organopolysiloxanen durch Umsetzung von Hydroxyendgruppen aufweisenden Organopolysiloxanen mit sekundäre oder tertiäre Aminogruppe aufweisendem Alkoxysilan, in Gegenwart von Säure, und den Einsatz des Umsetzungsprodukts als RTV-1-Alkoxymassen.

Der Begriff Organopolysiloxane soll im Rahmen der vorliegenden Erfindung dimere, oligomere und polymere Siloxane umfassen.

Organopolysiloxanmassen, die unter Ausschluß von Feuchtigkeit lagerfähig sind und unter Zutritt von Feuchtigkeit bei Raumtemperatur unter Abspaltung von Alkoholen vernetzen, sog. RTV-1-Alkoxymassen, sind bereits seit langem bekannt. Sie bestehen im wesentlichen aus mit Organyloxygruppen terminiertem Organopolysiloxan, und als weiteren Bestandteilen Vernetzer mit mindestens drei hydrolysierbaren Gruppen, Katalysator und gegebenenfalls Additiven. Der Vorteil dieser RTV-1-Alkoxysysteme ist, daß sie beim Vernetzungsvorgang geruchlose, neutrale, umweltverträgliche Alkohole als Spaltprodukte freisetzen.

Mit Organyloxygruppen terminiertes Organopolysiloxan wird durch Umsetzungen von HO-terminiertem Organopolysiloxan mit Alkoxysilanen hergestellt. Dies ist beispielsweise in der US-A-4,942,211 beschrieben. Nachteilig bei diesem Verfahren ist, daß die Umsetzung bei Raumtemperatur einige Stunden benötigt. Bei erhöhter Temperatur wird zwar die Reaktionszeit verkürzt, ist aber noch so lange, daß gewartet werden muß, bis mit dem gebildeten mit Organyloxygruppen terminierten Organopolysiloxan und weiteren Bestandteilen RTV-1-Alkoxymassen hergestellt werden können.

Die Umsetzungen von HO-terminiertem Organopolysiloxan mit Alkoxysilanen in Gegenwart von verschiedenen Katalysatoren ist bekannt. Beispielsweise wird in US-A-5,196,497 die Umsetzung in Anwesenheit von Alkali-Hydroxiden durchgeführt. Die Desaktivierung der Katalysatoren erfordert jedoch einen weiteren Reaktionsschritt.

Der Erfindung liegt die Aufgabe zugrunde, RTV-1-Alkoxymassen auf möglichst einfache Weise herzustellen.

Die Erfindung betrifft ein Verfahren zur Herstellung von mit Organyloxygruppen terminiertem Organopolysiloxan, bei dem
(A) HO-terminiertes Organopolysiloxan mit
(B) Alkoxysilan, das mindestens zwei Alkoxygruppen und einen Rest aufweist, der mindestens eine sekundäre oder tertiäre Aminogruppe enthält, die über einen zweiwertigen C₁₋₁₂-Kohlenwasserstoffrest an das Siliciumatom gebunden ist, in Gegenwart von
(C) saurem Phosphorsäureester der allgemeinen Formel (IV)

   (HO)ₐOP (-O-R⁷) ₍₃₋ₐ₎ (IV),

   in der
   - R⁷: die allgemeine Formel V

   [(CR⁸ ₂)_{b}-O]_{c}[(CR⁹ ₂)_{d}]ₒ-L-M (V),

   aufweist, in der
   - R⁸ und R⁹: einen Wasserstoff-, Methyl- oder Hydroxylrest,
   - b und d: die Werte 2 oder 3,
   - c: ganzzahlige Werte von 1 bis 15,
   - o: die Werte 0 oder 1,
   - L: einen Rest aus der Gruppe -O-, -COO-, -OOC-, -CONR²-, -NR²CO- und -CO-,
   - M: einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste R8 und R9 an jedem Kohlenstoffatom nur einmal ein Hydroxylrest sein können, und
   - a: die Werte 1 oder 2 bedeuten,
   umgesetzt werden.

Das Verfahren läuft bereits bei Raumtemperatur mit extrem hoher Reaktionsgeschwindigkeit selektiv ab, so daß unmittelbar nach Vermischen der Komponenten (A), (B) und (C) das gebildete Organyloxygruppen terminierte Organopolysiloxan, gegebenenfalls nach Zumischung weiterer Bestandteile als RTV-1-Alkoxymasse eingesetzt werden kann.

Ein weiterer Vorteil bei diesem Verfahren ist darin zu sehen, daß dabei keine Nebenreaktionen ablaufen und beispielsweise an linearem Organopolysiloxan die Bildung von T- und Q-Einheiten nicht beobachtet wurde. Die sich bildenden Ammoniumsalze müssen aus dem Reaktionsprodukt nicht entfernt werden, da sie in RTV-1-Alkoxymassen nicht stören und sogar auf die Vulkanisationsgeschwindigkeit beschleunigend wirken. Ein Überschuß an saurem Phosphorsäureester (C) stört weder in dem gebildeten Organyloxygruppen terminierten Organopolysiloxan noch in den RTV-1-Alkoxymassen.

Als HO-terminiertes Organopolysiloxan (A) werden vorzugsweise lineare α,ω-Dihydroxypoly(diorganosiloxane) der allgemeinen Formel(I)

HO-[R₂SiO]ₘ-H (I),

eingesetzt, worin
- **R**: einwertige, gegebenenfalls mit Fluor-, Chlor-, Brom-C₁-C₄-Alkoxyalkyl- oder Cyanogruppen substituierte C₁-C₈-Kohlenwasserstoffreste bedeutet und
- **m**: solche Werte bedeutet, die einer Viskosität des HO-terminierten Organopolysiloxans (A) von 0,05 bis 1000 Pa.s entsprechen.

Beispiele für Kohlenwasserstoffreste R sind lineare und cylische gesättigte und ungesättigte Alkylreste, wie der Methylrest, Arylreste, wie der Phenylrest, Alkarylreste, wie Tolylreste und Aralkylreste, wie der Benzylrest.

Bevorzugt als Rest **R** sind unsubstituierte Kohlenwasserstoffreste mit 1 bis 6 Kohlenstoffatome, wobei der Methylrest besonders bevorzugt ist.

Die Organopolysiloxane (A) besitzen vorzugsweise eine Viskosität von 100 bis 1000000 mPa.s, insbesondere von 20000 bis 350000 mPa.s, jeweils gemessen bei 23° C.

Als Alkoxysilan (B) werden vorzugsweise Alkoxysilane der allgemeinen Formel(II)

(R¹O)ₙSiR² ₍₃₋ₙ₎R³ (II),

eingesetzt, in der
- **R**^{**1**}**und R**^{**2**}: jeweils einwertige, gegebenenfalls mit Fluor-, Chlor-, Brom-, C₁-C₄-Alkoxyalkyl- oder Cyanogruppen substituierte C₁-C₁₀-Kohlenwasserstoffreste,
- **n**: die Werte 2 oder 3,
- **R**^{**3**}: einen einwertigen Rest der allgemeinen Formel (III)

HₚR⁴₍₂₋ₚ₎N[-R⁵-NR⁶]_{q}-(CH₂)-R⁵- (III),
- **R**^{**4**}: einwertige, gegebenenfalls mit Fluor-, Chlor-, Brom-, C₁-C₄-Alkoxyalkyl- oder Cyanogruppen substituierte C₁-C₁₀-Alkylreste,
- **R**^{**5**}: zweiwertige, gegebenenfalls mit Fluor-, Chlor-, Brom-, C₁-C₄-Alkoxyalkyl- oder Cyanogruppen substituierte C₁-C₁₂-Alkylenreste,
- **R**^{**6**}: Wasserstoffrest oder einwertige, gegebenenfalls mit Fluor-, Chlor-, Brom-, C₁-C₄-Alkoxyalkyl- oder Cyanogruppen substituierte C₁-C₁₀-Alkylreste,
- **p**: die Werte 0 oder 1 und
- **q**: die Werte 0, 1, 2 oder 3 bedeuten.

Vorzugsweise bedeuten **R**^{**1**} **und R**^{**2**} jeweils unsubstituierte C₁-C₆-Kohlenwasserstoffreste, insbesondere Methyl-, Ethyl- und Propylreste.

Vorzugsweise bedeutet **R**^{**4**} lineare und cylische gesättigte C₁-C₁₀-Alkylreste, insbesondere C₁-C₈-Alkylreste.

Vorzugsweise bedeutet **R**^{**5**} lineare und verzweigte gesättigte C₁-C₁₀-Alkylreste, insbesondere C₁-C₈-Alkylreste. Insbesondere sind die Reste **R**^{**5**} unsubstituiert.

Vorzugsweise weist **R**^{**6**} ein Wasserstoffrest und die bevorzugten Bedeutungen von **R**^{**4**} auf. Wasserstoffrest ist besonders bevorzugt.

Vorzugsweise besitzt **p** den Wert 1.

Als Brönstedt- oder Lewissäuren (C) können beispielsweise Mineral-, Carbon-, Sulfonsäuren sowie Metallverbindungen, Metallsalze und Metallkomplexsalze, die als Lewis-Säure fungieren, eingesetzt werden. Beispiele für Lewis-Säuren sind BF₃, AlCl₃, TiCl₃, SnCl_{4,} SO_{3,} PCl₅, POCl₃, FeCl₃ und dessen Hydrate und ZnCl₂. Beispiele für Brönstedt-Säuren sind Bor-, Tetrafluorobor-, Salpetersäure, salpetrige Säure, Phosphorsäure, phosphorige Säure, unterphosphorige Säure, saure Phosphorsäureester, saure Polyphosphorsäureester, Schwefelsäure, schwefelige Säure, Peroxoschwefel-, Salz-, Fluß-, Jodwasserstoff-, Bromwasserstoff-, Perchlor-, Hexafluorophosphorsäure, Benzolsulfon-, p-Toluolsulfon-, Methansulfon-, Trifluormethansulfon- und Carbonsäuren, wie Chloressig-, Trichloressig-, Essig-, Acryl-, Benzoe-, Trifluoressig-, Zitronen-, Croton-, Ameisen-, Fumar-, Malein-, Malon-, Gallus-, Itacon-, Milch-, Wein-, Oxal-, Phthal- und Bernsteinsäure.

Es können im Verfahren auch Verbindungen eingesetzt werden, die mit Wasser hydrolysieren und Brönstedt-Säuren bilden. Dabei muß gleichzeitig soviel Wasser eingesetzt werden, wie zur Bildung der Brönstedt-Säuren erforderlich ist. Beispielsweise können hydrolyseempfindliche Carboxylsilane, wie Methyltriacetoxysilan bzw. Siloxane eingesetzt werden. Das für die Hydrolyse erforderliche Wasser kann auch an Feststoffen, wie Füllstoffen adsorbiert sein.

Besonders bevorzugt als Brönstedt-Säuren (C) sind saure Phosphorsäureester der allgemeinen Formel (IV)

(HO)ₐOP(-O-R⁷) ₍₃₋ₐ₎ (IV),

in der
- **R**^{**7**}: einen einwertigen, gegebenenfalls mit Hydroxyl-, Fluor-, Chlor-, Brom-, C₁-C₁₀-Alkoxyalkyl- oder Cyanogruppen substituierten C₃- bis C₅₀-Kohlenwasserstoffrest, der durch beidseitig an Kohlenstoffatome gebundene Reste aus der Gruppe -O-, -COO-, -OOC-, -CONR²-, -NR²CO- und -CO- unterbrochen sein kann.

Die Reaktionsprodukte der sauren Phosphorsäureester der allgemeinen Formel (IV) stabilisieren das gebildete Organyloxygruppen terminierte Organopolysiloxan und daraus hergestellte RTV-1-Alkoxymassen bei der Lagerung. Insbesondere bleiben die Hautbildungszeiten der RTV-1-Alkoxymassen nahezu konstant stabil und eine Verfärbung wird unterbunden. Die sauren Phosphorsäureester der allgemeinen Formel (IV) weisen vorzugsweise Tensidcharakter auf.

Vorzugsweise bedeutet c ganzzahlige Werte von 1 bis 10. Vorzugsweise bedeutet L einen Rest -O-.

Vorzugsweise bedeutet M einen gegebenenfalls mit C₁-C₁₀-Alkoxyalkylgruppen substituierten C₁- bis C₂₀-Kohlenwasserstoffrest.

Insbesondere bevorzugt sind die Kohlenwasserstoffreste R⁷ der allgemeinen Formel (V), in der R⁸ und R⁹einen Wasserstoffrest, b und d die Werte 2, c die Werte 2, 3, 4 oder 5, L einen Rest -O- und M einen unsubstituierten C₅-C₁₈-Kohlenwasserstoffrest bedeuten.

In den allgemeinen Formeln (I) bis (V) sind alle Reste R¹ bis R⁹ sowie alle Indizes a, b, c, d, m, n, o, p und q unabhängig voneinander gleich oder verschieden.

In allen Formeln gilt die Vierwertigkeit des Siliciumatoms. Beispielsweise ist n + o höchstens 4.

Die sauren Phosphorsäureester (C) werden bezogen auf saure Gruppen und auf die Hydroxylgruppen des HO-terminierten Organopolysiloxans (A) vorzugsweise in äquivalenten Mengen, insbesondere in einem geringen Überschuß zugesetzt.

Die Zugabe der Alkoxysilane (B) zu den HO-terminierten Organopolysiloxanen (A) erfolgt hingegen bevorzugt in einem Überschuß was die stöchiometrischen Verhältnisse betrifft. Um die Reaktion der HO-terminierten Organopolysiloxane (A) mit Alkoxysilane (B) möglichst vollständig ablaufen zu lassen, können bevorzugt 1 bis 50 Gewichtsteile der Alkoxysilane (B) pro 500 Gewichtsteile der HO-terminierten Organopolysiloxane (A) eingesetzt werden. Der während der Reaktion nicht abreagierte Überschuß an Alkoxysilanen (B) ist in dem mit Organyloxygruppen terminiertem Organopolysiloxan und den RTV-1-Alkoxymassen nicht von Nachteil und kann deshalb im Reaktionsprodukt verbleiben. Ein Überschuß an Alkoxysilanen (B) kann als Haftver-. mittler in den RTV-1-Alkoxymassen wirken.

Die Umsetzung erfolgt vorzugsweise bei Temperaturen von +20 -50° C, insbesondere bei Raumtemperatur. Die Reaktionszeit beträgt abhängig vom eingesetzten Alkoxysilanen (B) 1 - 10 min.

Die Reaktionsgeschwindigkeit bei der Umsetzung richtet sich zum einen nach der Reaktivität des verwendeten Alkoxysilans (B), zum anderen nach der Acidität des sauren Phosphorsäureesters (C).

Die besonders bevorzugte Umsetzungsdauer beträgt bei Raumtemperatur 1-5 min, was gerade für die Herstellung von RTV-1 Massen im Eintopfverfahren vom Vorteil ist.

Die Erfindung betrifft auch RTV-1-Alkoxymassen, welche das nach dem vorstehenden Verfahren hergestellte Reaktionsprodukt, das als wesentlichen Bestandteil mit Organyloxygruppen terminiertes Organopolysiloxan enthält, umfassen. Insbesondere betrifft die Erfindung RTV-1-Alkoxymassen, die das Reaktionsprodukt enthalten, welches durch Einsatz der sauren Phosphorsäureester der allgemeinen Formel (IV) hergestellt wird.

Die mit Organyloxygruppen terminierten Organopolysiloxane und damit hergestellte RTV-1-Alkoxymassen können, um eine verbesserte Lagerstabilität der Fertigmassen zu erreichen, wie in der US-A-4,942,211 beschrieben, mit Metallsalzen verzweigter Carbonsäuren stabilisiert werden.

Zusätzlich zu den vorgenannten Komponenten können die RTV-1-Alkoxymassen weitere an sich bekannte Komponenten enthalten.

Weitere Stoffe, die vorzugsweise bei der Bereitung der RTV-1-Alkoxymassen mitverwendet werden können, sind Silane der allgemeinen Formel (VI)

R¹⁰ _{µ}Si(OR¹¹)_{4-µ}

- **R**^{**10**} **und R**^{**11**}: einwertige, gegebenenfalls mit Fluor-, Chlor-, Brom-, C₁-C₄-Alkoxyalkyl- oder Cyanogruppen substituierte C₁-C₁₃-Kohlenwasserstoffreste und
- µ: die Werte 0, 1 oder 2 bedeuten,
oder deren Teilhydrolysate.

Bevorzugte Bedeutungen von **R**^{**10**} **und R**^{**11**} sind vorstehend für R angegeben.

Teilhydrolysate Silane der allgemeinen Formel (VI) sind beispielsweise Hexamethoxydisiloxan und Hexaethoxydisiloxan.

Weitere Stoffe, die vorzugsweise bei der Bereitung der RTV-1-Alkoxymassen mitverwendet werden können, sind Bis(trialkoxysilyl)C₁-C₁₂-alkane, bei denen die Alkoxyreste die Bedeutungen von **OR**^{**11**} aufweisen, beispielsweise Bis(triethoxysilyl)ethan.

Desgleichen können bei der Bereitung der RTV-1-Alkoxymassen verwendet werden Kondensationskatalysatoren, verstärkende Füllstoffe, nichtverstärkende Füllstoffe, Pigmente, lösliche Farbstoffe, Riechstoffe, Weichmacher, wie bei Raumtemperatur flüssige, durch Trimechylsiloxygruppen endblockierte Dimethylpolysiloxane oder Phosphorsäureester, Fungicide, harzartige Organopolysiloxane, einschließlich solcher aus (CH₃)₃SiO_{1/2}- und SiO_{4/2}- Einheiten, rein-organische Harze, wie Homo- oder Mischpolymerisate des Acrylnitrils, Styrols, Vinylchlorids oder Propylens, wobei solche rein-organischen Harze, insbesondere Mischpolymerisate aus Styrol und n-Butylacrylat, bereits in Gegenwart von in den endständigen Einheiten je eine Si-gebundene Hydroxylgruppe aufweisendem Diorganopolysiloxan durch Polymerisation der genannten Monomeren mittels freier Radikale erzeugt worden sein können, Korrosionsinhibitoren, Polyglykole, die verestert und/oder verethert sein können, Oxydationsinhibitoren, Hitzestabilisatoren, Lösungsmittel, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit SiC-gebundenen Mercaptoalkylresten, sowie zellenerzeugende Mittel, z.B. Azodicarbonamid. Desgleichen können Haftvermittler, vorzugsweise aminofunktionelle Silane zugegeben werden.

Kondensationskatalysatoren werden vorzugsweise eingesetzt. Es können die RTV-1-Alkoxymassen erfindungsgemäß beliebige Kondensationskatalysatoren enthalten, die auch bisher in unter Ausschluß von Wasser lagerfähigen, bei Zutritt von Wasser bei Raumtemperatur zu Elastomeren vernetzenden Massen hergestellt worden sind, vorliegen konnten.

Beispiele für solche Kondensationskatalysatoren sind organische Verbindungen von Zinn, Zink, Zirkonium, Titan und Aluminium. Bevorzugt unter diesen Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

≡ SiOSn ≡

bzw. durch SnC-gebundene, einwertige organische Reste abgesättigt sind.

Vorzugsweise enthalten die RTV-1-Alkoxymassen Füllstoffe. Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern.

Die genannten Füllstoffe können hydrophobiert sein, beispielsweise durch die Behandlung mit Organosilanen bzw. -siloxanen oder mit Stearinsäure oder durch Verätherung von Hydroxylgruppen zu Alkoxygruppen. Es kann eine Art von Füllstoff, es kann auch ein Gemisch von mindestens zwei Füllstoffen eingesetzt werden.

Für die Vernetzung der RTV-1-Alkoxymassen reicht der übliche Wassergehalt der Luft aus. Die Vernetzung kann, falls erwünscht, auch bei höheren oder niedrigeren Temperaturen als Raumtemperatur, z.B. bei -5° bis 10° C oder bei 30° bis 50° C durchgeführt werden.

Die erfindungsgemäßen RTV-1-Alkoxymassen eignen sich somit ausgezeichnet beispielsweise als Abdichtungsmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, oder von gummielastischen Formkörpern sowie für die Isolierung von elektrischen oder elektronischen Vorrichtungen.

In den nachstehend beschriebenen Beispielen beziehen sich alle Angaben von Teilen mit Prozentsätzen, falls nicht anders angegeben, auf das Gewicht. Desweiteren beziehen sich alle Viskositätsangaben auf eine Temperatur von 25° C. Sofern nicht anders angegeben werden die nachstehenden Beispiele bei einem Druck der umgebenden Atmosphäre, also bei etwa 1000 hPa, und einer Raumtemperatur, also bei etwa 20° C, bei einer Temperatur, die sich beim Zusammengeben der Reaktanden bei Raumtemperatur ohne zusätzliche Heizung oder Kühlung einstellt, durchgeführt.

### Beispiele

Beispiel 1 (Vergleichsbeispiel)

In einem Planetenmischer mit Vakuumausrüstung werden unter Wasserausschluß 500 Gewichtsteile eines Dimethylpolysiloxans, das in den endständigen Einheiten je eine Hydroxylgruppe aufweist mit einer Viskosität von 80000 mPa.s bei 23°C mit 5 Gewichtsteilen 3-Cyclohexylaminopropyltrimethoxysilan (käuflich bei Wacker-Chemie GmbH) bei einer Temperatur von 23°C vermischt. Dem Gemisch setzt man unmittelbar 1,3 Gewichtsteile Essigsäure (konz.) zu, vermischt und fügt 300 g eines Polydimethyl-siloxans mit Trimethylsiloxygruppen in den endständigen Einheiten einer Viskosität von 100 mm²/s (23°C),
10 g Zink-2-ethylhexoat,
80 g pyrogene, hydrophobe Kieselsäure mit einer Oberfläche von 150 m²/g nach BET,
40 g Tetraethylsilicat und
1 g Di-n-butoxy-bis (triethoxy-siloxy) stannan in der angegebenen Reihenfolge zu.

Nach Homogenisierung im Vakuum, wird der Compound in feuchtigkeitsdichte Gebinde abgefüllt. Nach verschiedenen Zeiträumen werden Proben entnommen und die phsikalischen Eigenschaften der daraus hergestellten Elastomere bestimmt. Die dabei erzielten Ergebnisse sind in Tabelle 1 aufgeführt.

### Beispiel 2 (Vergleichsbeispiel)

Es-wird anolog Beispiel 1 vorgegangen. Zu 500 Gewichtsteilen α,ω - Dihydroxypolyorganosiloxan werden folgende Ingredienzien in der angegebenen Reihenfolge zugemischt:

| | | |
|---|---|---|
| 300,0 | Gew. Tl | Polydimethylsiloxan mit -Si(CH₃)₃-Endgruppen |
| 80,0 | Gew. Tl | pyrogene, hydrophobe Kieselsäure mit einer Oberfläche von 150m²/g nach BET |
| 5,0 | Gew. Tl | 3-Cyclohexylaminopropyltrimethoxysilan |
| 3,5 | Gew. Tl | Methyltriacetoxysilan |
| 40,0 | Gew. Tl | eines 1/1 Gemisches von Vinyltrimethoxysilan und Methyltrimethoxysilan() |
| 3,0 | Gew. Tl | Dibutylzinndi-2-ethylhexoat |

### Beispiel 3 (Vergleichsbeispiel)

Es wird anolog Beispiel 1 vorgegangen. Zu 500 Gewichtsteilen Polydimethylsiloxan -Si(CH₃)₂-OH-Endgruppen fügt man folgende Ingredienzien zu:

| | | |
|---|---|---|
| 6,0 | Gew. Tl | 3-cyclohexylaminopropyltriethoxysilan |
| 2,8 | Gew. Tl | 2-Ethylhexansäure |
| 385,0 | Gew. Tl | Polydimethylsiloxan mit -Si(CH₃)₃-Endgruppen |
| 8,0 | Gew. Tl | Calcium-2-ethylhexoat |
| 78,0 | Gew. Tl | pyrogene hydrophobe Kieselsäure mit einer Oberfläche von 150m²/g nach BET |
| 38,0 | Gew. Tl | Polyethoxysiloxan |

### Beispiel 4 (Vergleichsbeispiel)

Es wird anolog Beispiel 1 vorgegangen. Es werden vermischt:

| | | |
|---|---|---|
| 500,0 | Gew. Tl | Polydimethylsiloxan mit -Si(CH₃)₂-OH-Endgruppen |
| 2,0 | Gew. Tl | Phosphorsäure |
| 5,0 | Gew. Tl | 3-cyclohexylaminopropyltrimethoxysilan |
| 385,0 | Gew. Tl | Polydimethylsiloxan mit -Si(CH₃)₃-Endgruppen |
| 4,0 | Gew. Tl | Zink-2-ethylhexoat |
| 80,0 | Gew. Tl | pyrogene hydrophobe Kieselsäure mit einer Oberfläche von 150m²/g nach BET |
| 39,0 | Gew. Tl | eines 1/1 Gemisches von Polyethoxysi loxan mit 1,2-bis (Triethoxysilyl)ethan |

### Beispiel 5 (Vergleichsbeispiel)

Es wird anolog Beispiel 1 vorgegangen. Es werden vermischt:

| | | |
|---|---|---|
| 500,0 | Gew. Tl | Polydimethylsiloxan mit -Si (CE₃)₂-OH-Endgruppen |
| 3,5 | Gew. Tl | Butylaminopropyltrimethoxysilan |
| 1,0 | Gew. Tl | Essigsäure (konz.) |
| 385,0 | Gew. Tl | Polydimethylsiloxan mit -Si(CH₃)₃-Endgruppen |
| 4,0 | Gew. Tl | Zink-2-ethylhexoat |
| 85,0 | Gew. Tl | pyrogene hydrophobe Kieselsäure mit einer Oberfläche von 150m²/g nach BET |
| 35,0 | Gew. Tl | Polyethoxysiloxan |

### Beispiel 6

Es wird anolog Beispiel 1 vorgegangen. Es werden vermischt:

| | | |
|---|---|---|
| 500,0 | Gew. Tl | Polydimethylsiloxan mit -Si(CH₃)₂-OH-Endgruppen |
| 4,0 | Gew. Tl | alkoxylierter Phosphorsäureester |
| 8,0 | Gew. Tl | 3-Cyclohexylaminopropyltrimethoxysilan |
| 385,0 | Gew. Tl | Polydimethylsiloxan mit -Si(CH₃)₃-Endgruppen |
| 3,8 | Gew. Tl | Zink-2-ethylhexoat |
| 70,0 | Gew. Tl | pyrogene hydrophobe Kieselsäure mit einer Oberfläche von 150m²/g nach BET |
| 30,0 | Gew. Tl | Polyethoxysiloxan |

Der alkoxylierte Phosphorsäureester weist folgende Formel auf:

(OH)₁ PO[(OCH₂CH₂)₃₋₄-O-(CH₂)₁₁₋₁₄-CH₃]₂

und

(OH)₂ PO[(OCH₂CH₂)₃₋₄-O-(CH₂)₁₁₋₁₄-CH₃]₁

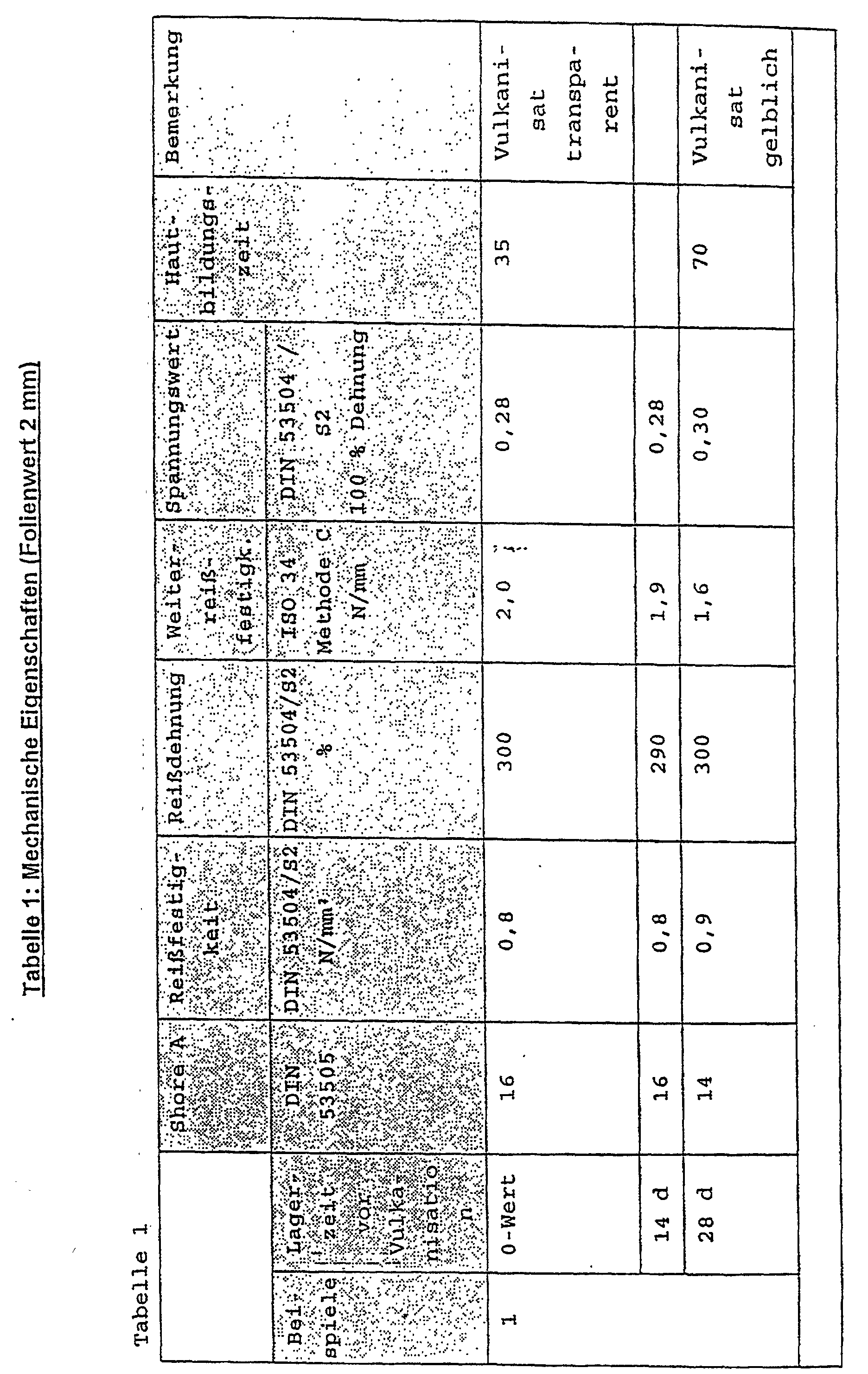

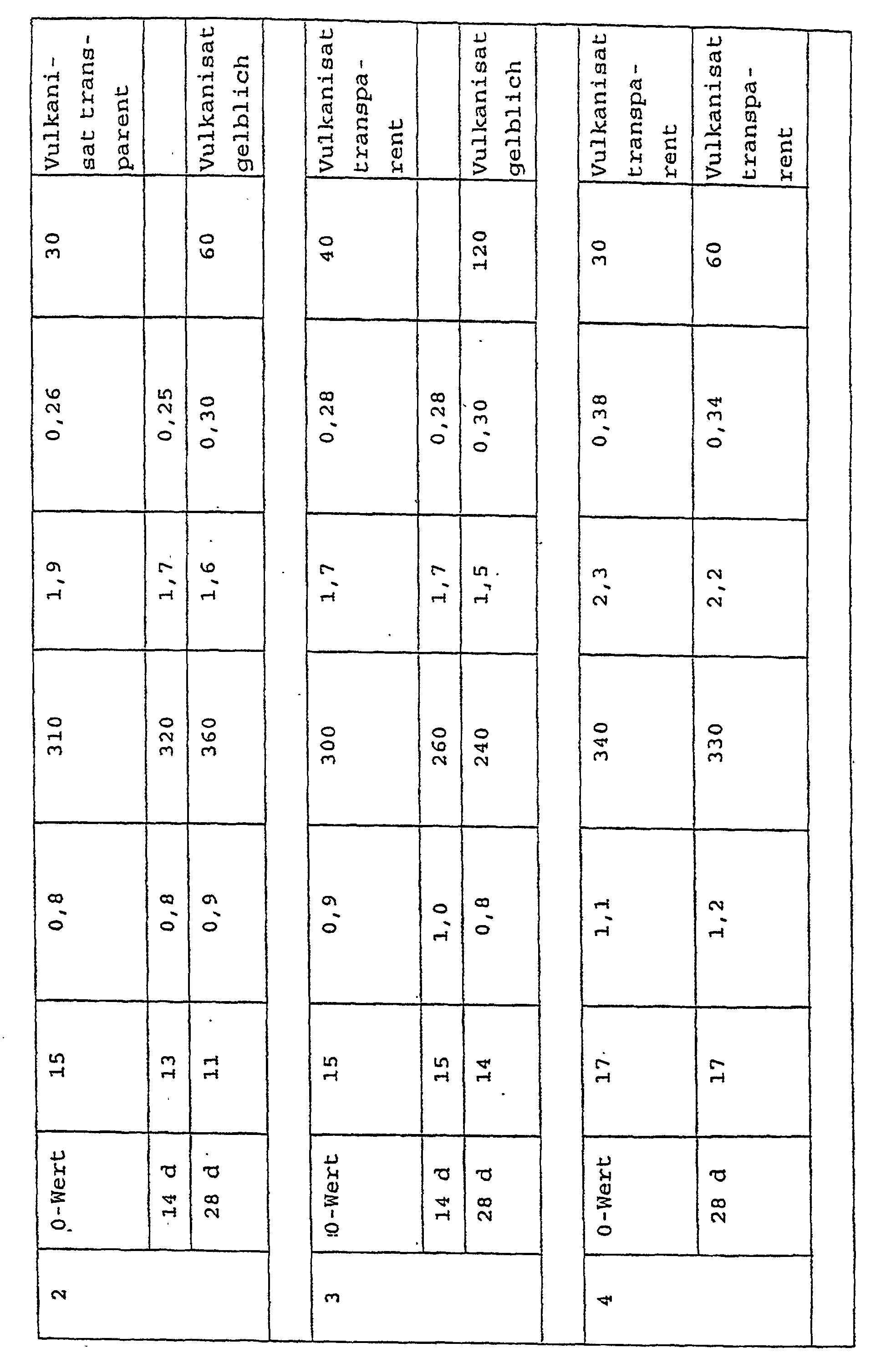

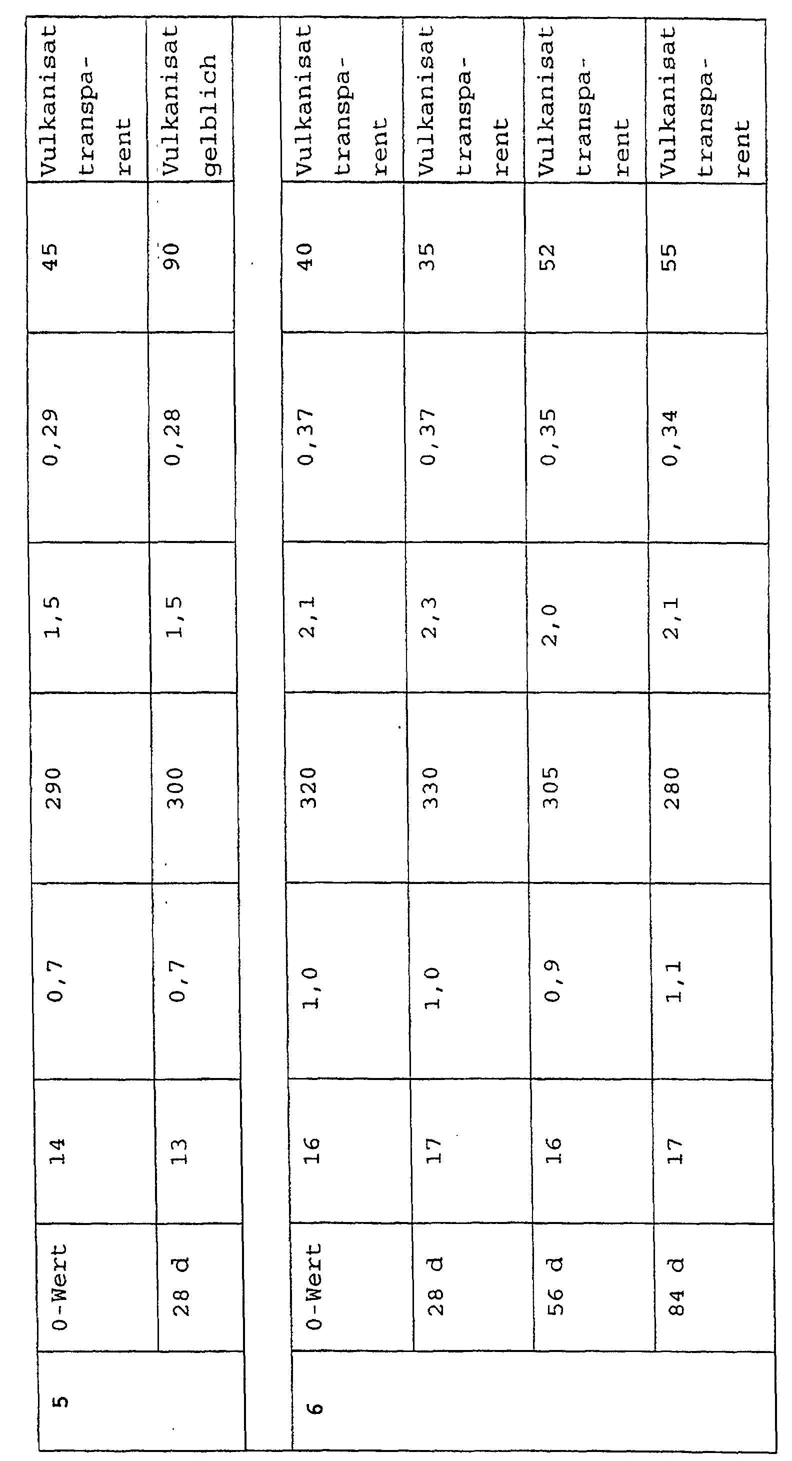

### Vergleichsbeispiel 1

Es wird anolog Beispiel 1 vorgegangen. Es werden in folgender Reihenfolge im Vakuum vermischt:

| | | |
|---|---|---|
| 500,0 | Gew. Tl | Polydimethylsiloxan mit -Si(CH₃)₂-OH-Endgruppen |
| 385,0 | Gew. Tl | Polydimethylsiloxan mit -Si(CH₃)₃- Endgruppen |
| 4,0 | Gew. Tl | beta-Aminoethylgammaaminopropylétrimechoxysilan |
| 1,2 | Gew. Tl | Essigsäure (konz.) |
| 31,0 | Gew. Tl | Polyethoxysiloxan |
| 70,0 | Gew. Tl | pyrogene hydrophobe Kieselsäure mit einer Oberfläche von 150m²/g nach BET |
| 3,8 | Gew. Tl | Zink-2-ethylhexoat |

### Vergleichsbeispiel 2

Es wird anolog Beispiel 1 vorgegangen. Es werden in folgender Reihenfolge im Vakuum vermischt:

| | | |
|---|---|---|
| 500,0 | Gew. Tl | Polydimethylsiloxan mit -Si(CH₃)₂-OH-Endgruppen |
| 385,0 | Gew. Tl | Polydimethylsiloxan mit -Si(CH₃)₃-Endgruppen |
| 4,0 | Gew. Tl | beta-Aminoethylgammaaminopropyltrimethoxysilan |
| 2,5 | Gew. Tl | Essigsäure (konz.) |
| 31,0 | Gew. Tl | Polyethoxysiloxan |
| 70,0 | Gew. Tl | pyrogene hydrophobe Kieselsäure mit einer Oberfläche von 150m²/g nach BET |
| 3,8 | Gew. Tl | Zink-2-ethylhexoat |

### Vergleichsbeispiel 3

Es wird anolog Beispiel 1 vorgegangen. Es werden in folgender Reihenfolge im Vakuum vermischt:

| | | |
|---|---|---|
| 500,0 | Gew. Tl | Polydimethylsiloxan mit -Si(CH₃)₂-OH-Endgruppen |
| 385,0 | Gew. Tl | Polydimethylsiloxan mit -Si(CH₃)₃-Endgruppen |
| 4,0 | Gew. Tl | beta-Aminoethylgammaaminopropyltrimethoxysilan |
| 5,0 | Gew. Tl | Essigsäure (konz.) |
| 31,0 | Gew. Tl | Polyethoxysiloxan |
| 70,0 | Gew. Tl | pyrogene hydrophobe Kieselsäure mit einer Oberfläche von 150m²/g nach BET |
| 3,8 | Gew. Tl | Zink-2-ethylhexoat |

### Vergleichsbeispiel 4

Es wird anolog Beispiel 1 vorgegangen. Es werden in folgender Reihenfolge im Vakuum vermischt:

| | | |
|---|---|---|
| 500,0 | Gew. Tl | Polydimethylsiloxan mit -Si(CH₃)₂-OH-Endgruppen |
| 300,0 | Gew. Tl | Polydimethylsiloxan mit -Si(CH₃)₃-Endgruppen |
| 4,5 | Gew. Tl | gamma-Aminopropyltriethoxysilan |
| 3,5 | Gew. Tl | Methyltriacetoxysilan |
| 80,0 | Gew. Tl | pyrogene hydrophobe Kieselsäure mit einer Oberfläche von 150m²/g nach BET |
| 40,0 | Gew. Tl | eines Gemisches Vinyl-Methyltrime thoxysilan (1/1) |
| 3,0 | Gew. Tl | di-Butylzinn-di-2-ethylhexoat |

### Vergleichsbeispiel 5

Es wird anolog Beispiel 1 vorgegangen. Es werden in folgender Reihenfolge im Vakuum vermischt:

| | | |
|---|---|---|
| 500,0 | Gew. Tl | Polydimethylsiloxan mit -Si(CH₃)₂-OH-Endgruppen |
| 300,0 | Gew. Tl | Polydimethylsiloxan mit -Si(CH₃)₃-Endgruppen |
| 3,0 | Gew. Tl | gamma-Aminopropyltrimethoxysilan |
| 1,5 | Gew. Tl | Phosphorsäure |
| 80,0 | Gew. Tl | pyrogene hydrophobe Kieselsäure mit einer Oberfläche von 150m²/g nach BET |
| 31,0 | Gew. Tl | Polyethoxysiloxan |

**Tabelle 2:**

| **Ergebnisse der Vergleichsversuche** | |
|---|---|
| **Beispiel 1** | Compound nach 1 Stunde verstrammt |
| | |
| **Beispiel 2** | Compound nach 3 Stunden verstrammt |
| | |
| **Beispiel 3** | Compound nach 22 Stunden verstrammt |
| | |
| **Beispiel 4** | Compound nach 4 Stunden verstrammt |
| | |
| **Beispiel 5** | Compound nach 13 Stunden verstrammt |

## Patentansprüche

1. Verfahren zur Herstellung von mit Organyloxygruppen terminiertem Organopolysiloxan, bei dem
(A) HO-terminiertes Organopolysiloxan mit
(B) Alkoxysilan, das mindestens zwei Alkoxygruppen und einen Rest aufweist, der mindestens eine sekundäre oder tertiäre Aminogruppe enthält, die über einen zweiwertigen C₁₋₁₂-Kohlenwasserstoffrest an das Siliciumatom gebunden ist, in Gegenwart von
(C) saurem Phosphorsäureester der allgemeinen Formel (IV)
(HO)ₐOP (-O-R⁷) ₍₃₋ₐ₎ (IV),
in der
R⁷ die allgemeine Formel V
[(CR⁸ ₂)_{b}-O]_{c}[(CR⁹ ₂)_{d}]ₒ-L-M (V),
aufweist, in der
R⁸ und R⁹ einen Wasserstoff-, Methyl- oder Hydroxylrest,
b und d die Werte 2 oder 3,
c ganzzahlige Werte von 1 bis 15,
o die Werte 0 oder 1,
L einen Rest aus der Gruppe -O-, -COO-, -OOC-, -CONR²-, -NR²CO- und -CO-,
M einen einwertigen, gegebenenfalls mit Hydroxyl-, Fluor-, Chlor-, Brom-, C₁-C₁₀-Alkoxyalkyl- oder Cyanogruppen substituierten C₁- bis C₂₀-Kohlenwasserstoffrest bedeuten, mit der Maßgabe, daß die Reste R⁸ und R⁹ an jedem Kohlenstoffatom nur einmal ein Hydroxylrest sein können, und
a die Werte 1 oder 2 bedeuten,
umgesetzt werden.

2. Verfahren nach Anspruch 1, bei dem als HO-terminiertes Organopolysiloxan (A) lineare α,ω-Dihydroxypoly(diorgano)siloxane der allgemeinen Formel (I) α,ω-Dihydroxypoly(diorgano)siloxane der allgemeinen Formel(I)
HO- [R₂SiO]ₘ-H (I),
eingesetzt werden, worin
R einwertige, gegebenenfalls mit Fluor-, Chlor-, Brom-C₁-C₄-Alkoxyalkyl- oder Cyanogruppen substituierte C₁-C₈-Kohlenwasserstoffreste bedeutet und
m solche Werte bedeutet, die einer Viskosität des HO-terminierten Organopolysiloxans (A) von 0,05 bis 1000 Pa.s entsprechen.

3. Verfahren nach Anspruch 1 oder 2, bei dem als Alkoxysilan (B) Alkoxysilane der allgemeinen Formel(II)
(R¹O)ₙSiR² ₍₃₋ₙ₎R³ (II),
eingesetzt werden, in der
R¹ und R² jeweils einwertige, gegebenenfalls mit Fluor-, Chlor-, Brom-, C₁-C₄-Alkoxyalkyl- oder Cyanogruppen substituierte C₁-C₁₀-Kohlenwasserstoffreste,
n die Werte 2 oder 3,
R³ einen einwertigen Rest der allgemeinen Formel (III)
HₚR⁴ ₍₂₋ₚ₎N[-R⁵-NR⁶]_{q}-(CH₂)-R⁵- (III),
R⁴ einwertige, gegebenenfalls mit Fluor-, Chlor-, Brom-, C₁-C₄-Alkoxyalkyl- oder Cyanogruppen substituierte C₁-C₁₀-Alkylreste,
R⁵ zweiwertige, gegebenenfalls mit Fluor-, Chlor-, Brom-, C₁-C₄-Alkoxyalkyl- oder Cyanogruppen substituierte C₁-C₁₂-Alkylenreste,
R⁶ Wasserstoffrest oder einwertige, gegebenenfalls mit Fluor-, Chlor-, Brom-, C₁-C₄-Alkoxyalkyl- oder Cyanogruppen substituierte C₁-C₁₀-Alkylreste,
p die Werte 0 oder 1 und
q die Werte 0, 1, 2 oder 3 bedeuten.

4. RTV-1-Alkoxymassen, welche das gemäß einem der Ansprüche 1 bis 6 erhältliche Reaktionsprodukt, das als wesentlichen Bestandteil mit Organyloxygruppen terminiertes Organopolysiloxan enthält, umfassen.

## Claims

1. Process for the preparation of an organopolysiloxane with organyloxy end groups, in which
(A) an organopolysiloxane with HO end groups is reacted with
(B) an alkoxysilane which has at least two alkoxy groups and a radical which contains at least one secondary or tertiary amino group, which is bonded to the silicon atom via a divalent C₁₋₁₂-hydrocarbon radical, in the presence of
(C) an acidic phosphoric ester of the general formula (IV)
(HO)ₐOP (-O-R⁷)₍₃₋ₐ₎ (IV)
in which
R⁷ has the general formula V
[(CR⁸ ₂)_{b}-O]_{c}[(CR⁹ ₂)_{d}]ₒ-L-M (V)
in which
R⁸ and R⁹ denote a hydrogen, methyl or hydroxyl radical,
b and d denote the values 2 or 3,
c denotes integral values from 1 to 15,
o denotes the values 0 or 1,
L denotes a radical from the group consisting of -O-, -COO-, -OOC-, -CONR²-, -NR²CO- and -CO-,
M denotes a monovalent C₁- to C₂₀-hydrocarbon radical which is optionally substituted by hydroxyl, fluorine, chlorine, bromine, C₁-C₁₀-alkoxyalkyl or cyano groups,
with the proviso that the radicals R8 and R9 on each carbon atom can be a hydroxyl radical only once, and
a denotes the values 0 or 1.

2. Process according to Claim 1, in which linear α,ω-dihydroxypoly(diorgano)siloxanes of the general formula (I)
HO-[R₂SiO]ₘ-H (I),
wherein
R denotes monovalent C₁-C₈-hydrocarbon radicals which are optionally substituted by fluorine, chlorine, bromine, C₁-C₄-alkoxyalkyl or cyano groups and
m denotes values which correspond to a viscosity of the organopolysiloxane (A) with HO end groups of 0.05 to 1000 Pa.s,
are employed as the organopolysiloxane (A) with HO end groups.

3. Process according to Claim 1 or 2, in which alkoxysilanes of the general formula (II)
(R¹O)ₙSiR² ₍₃₋ₙ₎R³ (II),
in which
R¹ and R² each denote monovalent C₁-C₁₀-hydrocarbon radicals which are optionally substituted by fluorine, chlorine, bromine, C₁-C₄-alkoxyalkyl or cyano groups,
n denotes the values 2 or 3,
R³ denotes a monovalent radical of the general formula (III)
HₚR⁴ ₍₂₋ₚ₎N[-R⁵-NR⁶]_{q}-(CH₂)-R⁵- (III),
R⁴ denotes monovalent C₁-C₁₀-alkyl radicals which are optionally substituted by fluorine, chlorine, bromine, C₁-C₄-alkoxyalkyl or cyano groups,
R⁵ denotes divalent C₁-C₁₂-alkylene radicals which are optionally substituted by fluorine, chlorine, bromine, C₁-C₄-alkoxyalkyl or cyano groups,
R⁶ denotes a hydrogen radical or monovalent C₁-C₁₀-alkyl radicals which are optionally substituted by fluorine, chlorine, bromine, C₁-C₄-alkoxyalkyl or cyano groups,
p denotes the values 0 or 1 and
q denotes the values 0, 1, 2 or 3,
are employed as the alkoxysilane (B).

4. RTV-1-alkoxy compositions which comprise the reaction product obtainable according to one of Claims 1 to 3 which comprises as an essential constituent an organopolysiloxane with organyloxy end groups.

## Revendications

1. Procédé de préparation d'organopolysiloxanes ayant des groupements organyloxy comme terminaisons, dans lequel on transforme
un organopolysiloxane (A) à terminaisons HO avec
un alkoxysilane (B), qui présente au moins deux groupements alkoxy et un radical qui contient au moins un groupement amino secondaire ou tertiaire, qui est lié à l'atome de silicium via un radical hydrocarboné en C₁ à C₁₂ divalent, en présence
d'un ester acide de l'acide phosphorique (C) de formule générale (IV)
(HO)ₐOP(-O-R⁷)₍₃₋ₐ₎ (IV)
dans laquelle
R⁷ présente la formule générale V
[(CR⁸ ₂)_{b}-O]_{c}[(CR⁹ ₂)_{d}]ₒ-L-M (V),
dans laquelle
R⁸ et R⁹ signifient un radical hydrogène, un radical méthyle ou un radical hydroxyle,
b et d signifient les valeurs 2 ou 3,
c signifie des valeurs entières de 1 à 15,
o signifie les valeurs 0 ou 1,
L signifie un radical du groupe constitué de -O-, -COO-, -OOC-, -CONR²-, -NR²CO- et -CO-,
M signifie un radical hydrocarboné en C₁ à C₂₀ monovalent, le cas échéant substitué par des groupements hydroxyle, fluor, chlore, brome, alkoxyalkyle en C₁ à C₁₀ ou cyano, sous réserve que les radicaux R8 et R9 sur chaque atome de carbone puissent n'être qu'une seule fois un radical hydroxyle, et a signifie les valeurs 1 ou 2.

2. Procédé selon la revendication 1, dans lequel on utilise comme organopolysiloxane (A) à terminaisons HO des α,ω-dihydroxypoly(diorgano)siloxanes linéaires de formule générale (I)
HO-[R₂SiO]ₘ-H (I)
dans laquelle
R signifie des radicaux hydrocarbonés en C₁ à C₈ monovalents, le cas échéant substitués par des groupements fluor, chlore, brome, alkoxyalkyle en C₁ à C₄ ou cyano et
m signifie des valeurs qui correspondent à une viscosité de l'organopolysiloxane (A) à terminaisons HO de 0,05 à 1 000 Pa.s.

3. Procédé selon les revendications 1 ou 2, dans lequel on utilise comme alkoxysilane (B) des alkoxysilanes de formule générale (II)
(R¹O)ₙSiR² ₍₃₋ₙ₎R³ (II)
dans laquelle
R¹ et R² signifient à chaque fois des radicaux hydrocarbonés en C₁ à C₁₀ monovalents, le cas échéant substitués par des groupements fluor, chlore, brome, alkoxyalkyle en C₁ à C₄ ou cyano,
n signifie les valeurs 2 ou 3,
R³ signifie un radical monovalent de formule générale (III)
HₚR⁴ ₍₂₋ₚ₎N[-R⁵-NR⁶]_{q}-(CH₂)-R⁵- (III),
R⁴ signifie des radicaux alkyle en C₁ à C₁₀ monovalents, le cas échéant substitués par des groupements fluor, chlore, brome, alkoxyalkyle en C₁ à C₄ ou cyano,
R⁵ signifie des radicaux alkylène en C₁ à C₁₂ divalents, le cas échéant substitués par des groupements fluor, chlore, brome, alkoxyalkyle en C₁ à C₄ ou cyano,
R⁶ signifie un radical hydrogène ou des radicaux alkyle en C₁ à C₁₀ monovalents, le cas échéant substitués par des groupements fluor, chlore, brome, alkoxyalkyle en C₁ à C₄ ou cyano,
p signifie les valeurs 0 ou 1 et
q signifie les valeurs 0, 1, 2 ou 3.

4. Masses RTV-1 contenant des alkoxy qui comprennent le produit de réaction pouvant être obtenu selon l'une quelconque des revendications 1 à 6, qui contient comme constituant principal un organopolysiloxane ayant des groupements organyloxy comme terminaisons.
